# EUROPEAN PATENT APPLICATION

(11) **EP 4 764 613 A1**
(43) Date of publication of application: **24.06.2026**
(21) Application number: 24221598.6
(22) Date of filing: 19.12.2024
(51) Int. Cl.: G01S 19/34, G01S 19/14

(54) **METHOD FOR OPERATING A GLOBAL NAVIGATION SATELLITE SYSTEM RECEIVER**

(71) Applicant: u-blox AG, 8800 Thalwil (CH)
(72) Inventor: Cheng, Zhenlan, 8800 Thalwil (CH); Lluis Garcia, Robert, 8800 Thalwil (CH); Parmeggiani, Giacomo, 8800 Thalwil (CH); Piotet, Louis, 8800 Thalwil (CH)
(74) Representative: Epping - Hermann - Fischer

(57) **Abstract**

A method for operating a GNSS receiver comprising a measurement engine for processing GNSS signals and a positioning engine, comprises operating the GNSS receiver for a plurality of consecutive epochs having a predefined periodicity. The method further comprises controlling, at the beginning of each epoch, a state of the measurement engine to be in an OFF state and, at an instant that is a defined timespan before an end of each epoch, controlling the state of the measurement engine to an ON state, during which the measurement engine is controlled to obtain a snapshot measurement of received GNSS signals. The snapshot measurement is evaluated by means of a quality measure. The method comprises reducing the defined timespan for a subsequent epoch if the quality measure meets first criteria, and increasing the defined timespan for the subsequent epoch if the quality measure meets second criteria. The first and the second criteria depend on a definition of required GNSS signals to be measured, the definition being set for each epoch.

## Description

### TECHNICAL FIELD

This disclosure relates to a method for operating a global navigation satellite system, GNSS, receiver. The disclosure further relates to a module and to a corresponding computer program product.

### BACKGROUND ART

Global Navigation Satellite Systems (GNSS) have become an essential component in modern navigation and location-based services. These systems usually comprise, among other modules, of a GNSS receiver, which receives and processes GNSS signals to determine precise position, velocity, and time information. While the performance of GNSS receivers continues to improve, there remains a significant challenge in optimizing the receiver's power consumption. With the growing demand for portable, battery-operated devices such as smartphones, wearables, and IoT devices, it is desirable to have power savings without sacrificing the accuracy and reliability of GNSS measurements.

A major challenge in power efficient GNSS operation is balancing power savings with the need for accurate signal processing. Reducing sampling rates or limiting active time can save power, but may also compromise the accuracy of position calculations, especially in challenging environments like urban canyons or dense forests, where signal interference is common.

One approach is to operate a GNSS receiver in a non-continuous mode to reduce power consumption while still being able to determine positioning information when needed. The key concept behind such receivers is the intermittent use of the receiver's hardware and software.

In non-continuous operation, the receiver periodically performs satellite signal acquisition and tracking, thereby searching for available GNSS satellites, measuring signals, and calculating the position.

Hence, non-continuous operating modes allow GNSS receivers to provide periodic updates of position, velocity and/or time information while keeping overall power consumption at a minimum, making it ideal for battery-powered devices like wearables, IoT sensors, and remote tracking systems.

In summary, while power efficiency is critical in GNSS receivers, maintaining accurate signal processing without compromising performance remains a significant challenge. Solutions to this problem must ensure that power savings do not result in a loss of positioning accuracy, particularly in dynamic or challenging environments.

### SUMMARY OF INVENTION

An object to be achieved is to provide an improved concept for operating a global navigation satellite system receiver that facilitates power savings.

This object is achieved with the subject-matter of the independent claims. Embodiments and developments derive from the dependent claims.

According to the present disclosure, a GNSS receiver takes and processes snapshots of a GNSS signal. The GNSS receiver comprises a measurement engine which does signal detection and snapshot measurement. The GNSS receiver also comprises another module, the positioning engine, which calculates a position, a velocity and a time by, for example, solving a linear equation system using the signals from the snapshot measurement. Each snapshot is measured within a certain timeframe or a portion of the timeframe, the timeframe called an epoch. The duration of an epoch is defined by the configurable periodicity of position fixes, the result of the GNSS positioning, indicating the device's position, velocity and time with a given accuracy. Additionally, the receiver can adapt its processing based on the user's movement. For example, a user might only require a position fix every one or two seconds in slow moving or even stationary devices, whereas other users might require updates every 0.1 seconds or more frequently in fast moving devices. However, the measurement engine is a considerable power drain when running on full power all the time.

Since it is unknown how long it will take to capture the required GNSS signals, the improved operating concept is based on the idea that it is necessary to estimate the time needed for performing a snapshot measurement. The improved operating concept overcomes this challenge and enables the GNSS system to turn off the measurement engine for as long as possible or to turn on the measurement engine for as short as possible, respectively. This happens in an adaptive way.

One approach is the introduction of a low power state which especially exploits epoch durations which are significantly longer than the time necessary to obtain a snapshot measurement. For example, a snapshot might be readily obtained after 100 milliseconds, whereas the next snapshot measurement is only due in one or two seconds. During this gap the measurement engine can enter an OFF state which effectively means to turn off as much of its hardware blocks as possible.

However, for best accuracy and to avoid dilution of the signals in the measurement the snapshot may be obtained as close to the end of an epoch as possible.

According to the improved operating concept, in a method for operating a GNSS receiver, the GNSS receiver comprises a measurement engine for processing GNSS signals and a positioning engine. The method comprises operating the GNSS receiver for a plurality of consecutive epochs having a predefined periodicity, for example ranging from 0.1 seconds up to many seconds. The method further comprises controlling, at the beginning of each epoch, a state of the measurement engine to be in an OFF state, wherein one or more hardware blocks of the measurement engine might be turned off, and controlling, at an instant that is a defined timespan before an end of each epoch, the state of the measurement engine to an ON state, during which the measurement engine is controlled to obtain a snapshot measurement of received GNSS signals.

The method further comprises evaluating the snapshot measurement by means of a quality measure. Furthermore, the method comprises reducing the defined timespan for a subsequent epoch if the quality measure meets first criteria and increasing the defined timespan for the subsequent epoch if the quality measure meets second criteria. The first and the second criteria depend on a definition of required GNSS signals to be measured, the definition being set for each epoch.

Setting the measurement engine to an OFF state according to the method can yield significant power savings while still providing measurements of sufficient quality for position determination, thus making it suitable for use in energy-critical applications.

For example, if neither the first criteria nor the second criteria are met by the quality measure, the defined timespan may remain unchanged for the subsequent epoch.

In example implementations, the method can be performed by one or more modules in a GNSS receiver or in a terminal device with a GNSS receiver, etc. The method can be implemented in software module(s) and is computationally efficient.

In some implementations, the first criteria comprise a condition that the snapshot measurement comprises the required GNSS signals such that the positioning engine is enabled to calculate at least one of a position, a velocity, and a time from the snapshot measurement. For example, the positioning engine may provide a list of favorable signals or required signals. The list may comprise of the frequencies and code-phases of those favorable signals which makes it easier to locate them. Alternatively, or in addition, required signals are defined within the measurement engine.

In some implementations, the first criteria comprise a further condition that the snapshot measurement is completed at a time instant that is at least a first threshold time before the end of the respective epoch. For example, when the snapshot measurement finishes within the defined timespan estimated or defined, respectively, during the previous epoch, before the end of the respective epoch, the defined timespan for the next snapshot measurement may be reduced. In some alternative developments the defined timespan may comprise a constant offset to provide a safety margin towards the end of the respective epoch. That way, the chance of obtaining the required signals through the snapshot measurement is improved.

In some implementations the second criteria comprise a condition that the snapshot measurement comprises the required GNSS signals such that the positioning engine is enabled to calculate at least one of a position, a velocity, and a time from the snapshot measurement and a further condition that the snapshot measurement is completed at a time instant that is less than a second threshold time before the end of the respective epoch. For example, the second threshold time is equal to or smaller than the first threshold time. For example, even though the snapshot measurement was successful and the required GNSS signals were obtained, the measurement might have finished very close, e.g. within the second threshold time towards the end of the respective epoch. By increasing the defined timespan for the next epoch, the chance of obtaining the required signals through the snapshot measurement is improved.

In some implementations the second criteria comprise a condition that the snapshot measurement does not comprise the required GNSS signals, e.g. such that the positioning engine is not enabled to calculate at least one of a position, a velocity, and a time from the snapshot measurement.

In some implementations the definition of the required GNSS signals comprises at least one of a sufficient number of GNSS signals, e.g. a minimum of four signals, to be measured, and a defined set of GNSS signals to be measured. For example, position, velocity and time may be determined through a system of equations, although other ways of determination should not be excluded by such example. For high precision it is favorable to obtain a sufficient number of GNSS signals for an overdetermined system. Furthermore, a defined set of GNSS signals comprises favorable signals which meet certain criteria that enable the calculation of position, velocity, and time. For example, each signal must be received from an individual satellite, whereby the precision of multiple satellites in view of a receiver depends on the relative position of the satellites to each other. When satellites are close together in the sky, the geometry is said to be weak and the dilution of precision (DOP) value is high. Therefore, it is favorable that the individual satellites are far apart, covering a large area of the sky, such that the geometry is strong and the DOP value is low.

Further criteria might, for example, involve the signals being part of an ephemeris, a list of orbit data, which is used, for example, in assisted GPS (A-GPS).

In some implementations the definition of the required GNSS signals is indicated by the positioning engine. For example, the positioning engine can set a tricky flag which indicates to the measurement engine to obtain an extra snapshot measurement which can be used to increase the accuracy. For example, the positioning engine might experience a challenging environment, e.g. urban canyons or dense forests, where signal interference is common, requiring more signals to calculate a precise position. In some developments the positioning engine might then provide information, e.g. by setting a variable or a bit, to indicate that a snapshot measurement should comprise more signals. This information might lead to, for example, increasing the defined timespan in the next epoch. This improves the chance of obtaining the required signals through the snapshot measurement.

In some implementations, controlling the measurement engine to be in the OFF state comprises setting the state of the measurement engine to the OFF state or leaving the state of the measurement engine in the OFF state, if it is already in the OFF state. For example, in some implementations, at the beginning of each epoch the measurement engine may be set to the OFF state unless it is not set to the OFF state already. This yields a very flexible way of controlling the measurement engine and allows configurations to achieve the best possible power efficiency.

In some implementations, the method further comprises controlling the measurement engine to be in the OFF state when obtaining the snapshot measurement comprising the required GNSS signals is completed before the end of the respective epoch. For example, controlling the measurement engine to the OFF state before the end of the respective epoch enables even more power savings. In such case an actual measurement duration can be determined as the time needed for obtaining the required signals for the snapshot measurement.

It comes without saying that such measurement duration is shorter than the defined timespan for the current epoch.

In some embodiments, the method might enter a so-called steady state, during which the defined timespan does not change from one epoch to the subsequent epoch. In further developments, for example, a constant offset or safety margin, e.g. 20 ms, might be added to the actual measurement duration of the current epoch regardless of whether this leads to increasing, maintaining or reducing the timespan for the subsequent epoch. For example, if the defined timespan was e.g. 80 ms, but an actual measurement duration was only 60 ms, the defined timespan for the subsequent epoch is again 80 ms, the result of adding an offset of 20 ms to the actual measurement duration of 60 ms, thereby resulting in a steady cycle. The offset may correspond to the first threshold time mentioned above.

In some implementations, the GNSS receiver is operable in a low power mode and in a full power mode. During the low power mode one or more hardware blocks of the measurement engine are disabled in the OFF state and all hardware blocks of the measurement engine are enabled in the ON state, and during the full power mode all hardware blocks of the measurement engine are enabled continuously during each epoch. In some implementations the clock of a processing unit may be reduced during the OFF state, thus enabling even more power savings. Disabling individual hardware blocks allows for fine-grained control of the consumed power, thus enabling fine-tuning of power consumption and positioning precision.

In some implementations the periodicity of the plurality of consecutive epochs is configurable. For example, a GNSS receiver which is operated in full power mode could work with a lower periodicity, whereas in low power phases a higher periodicity might be suitable. Furthermore, the periodicity may range from, e.g., 0.1 seconds up to many seconds and lies to the discretion of the user or a controlling entity. In some embodiments low power mode might be available for periods as little as 0.1 s to 0.5 s up to 10 s to 20 s whereas for even smaller periods full power mode may be employed. This highly flexible approach provides very customizable configuration options, making the current disclosure apt for a wide range of applications.

The present disclosure further provides a module for processing GNSS signals according to the improved processing concept. The module comprises a processing unit that is configured to perform a method according to any of the implementations described above.

For example, the GNSS module comprises the measurement engine, wherein the measurement engine comprises a Low Noise Amplifier, LNA, for amplifying the GNSS signals, the LNA being coupled to a radio frequency, RF, mixer; a frequency synthesizer for generating a local oscillator, LO, signal; the RF mixer for mixing the GNSS signals with the LO signal; and a digital signal processing block coupled to the RF mixer via an analog-to-digital converter and configured for generating the snapshot measurement. Further embodiments of the GNSS module or of the measurement engine, respectively, may contain more or fewer hardware blocks, providing simple means to adjust the hardware to various needs and optimizing power usage thereby.

In some implementations the processing unit is configured to enable and disable at least one of the LNA, the frequency synthesizer, the RF mixer, the analog-to-digital converter, and the digital signal processing block. In further developments the processing unit may be configured to enable or disable other hardware blocks. The list of modules which can be controlled by the processing unit is by no means exhaustive and can be adapted to meet future demands.

According to one embodiment of the improved processing concept, a computer program product comprises instructions which, when executed on one or more processors of a device having a hardware module, cause the one or more processors to perform a method according to any of the implementations described above.

### BRIEF DESCRIPTION OF DRAWINGS

The improved processing concept will be explained in more detail in the following with the aid of the drawings. Elements and functional blocks having the same or similar function bear the same reference numerals throughout the drawings. Hence their description is not necessarily repeated in the following drawings.

In the drawings:
- Figure 1: shows a flowchart of a method for operating a GNSS receiver;
- Figure 2: shows an example illustrating a GNSS receiver providing a snapshot measurement to a positioning engine, which thereof calculates position, time, and velocity; and
- Figure 3: shows an example illustrating how the various hardware blocks of a measurement engine are controlled by a processing unit; and
- Figure 4: shows an example of a timing sequence of a method for operating a GNSS receiver during an epoch.

### DETAILED DESCRIPTION

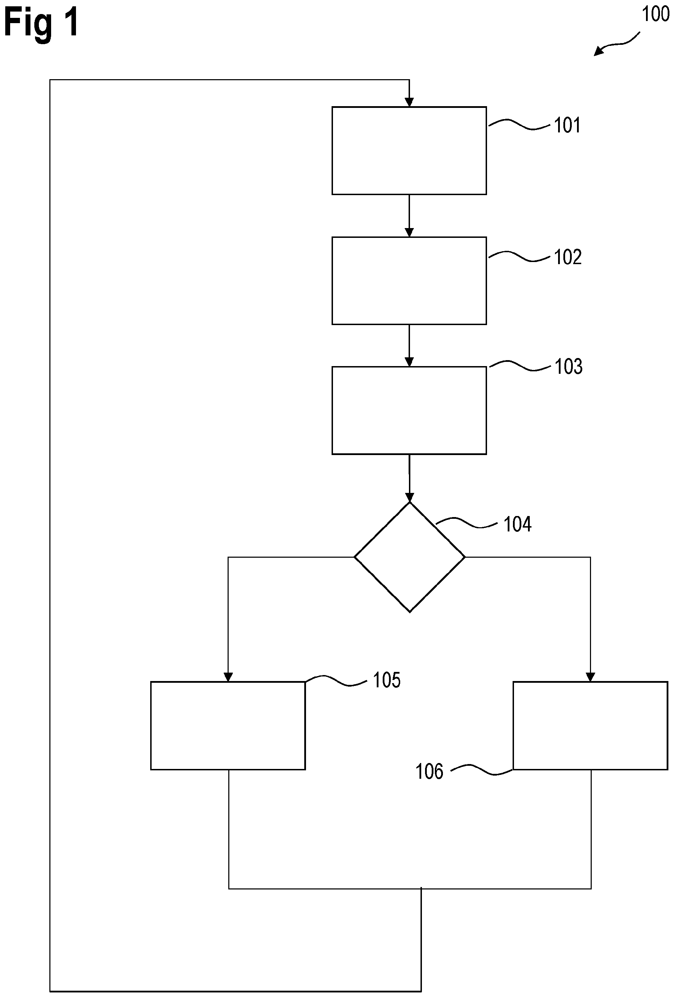

Figure 1 shows a flowchart of an example implementation of a method 100 for operating a GNSS receiver 200.

Method 100 may be performed by one or more modules in a device, such as a GNSS receiver 200 or a terminal device with a GNSS receiver 200. In the following, a GNSS receiver 200 is used as an example to perform the method.

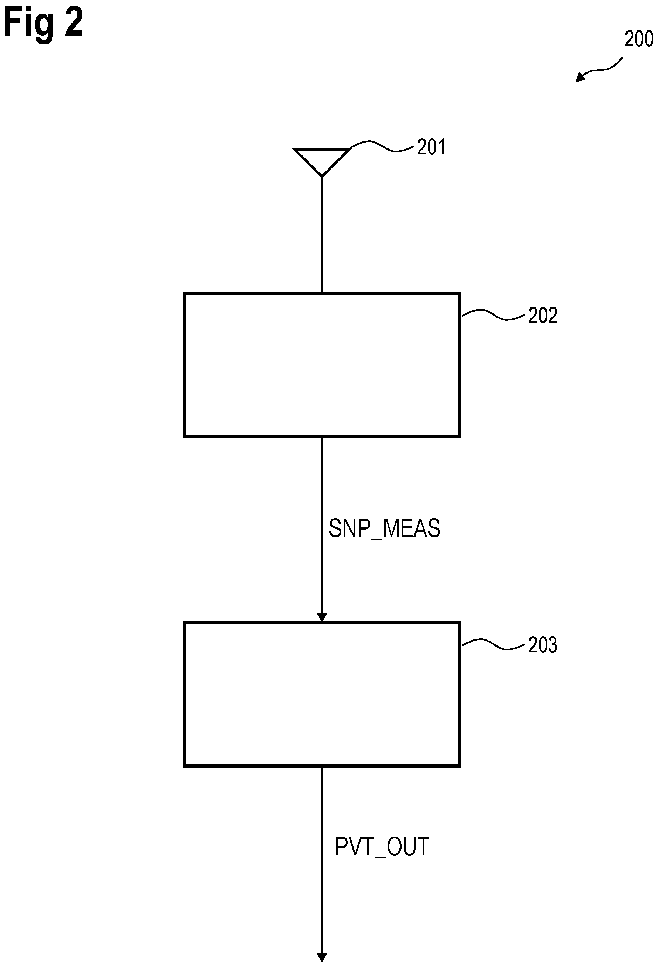

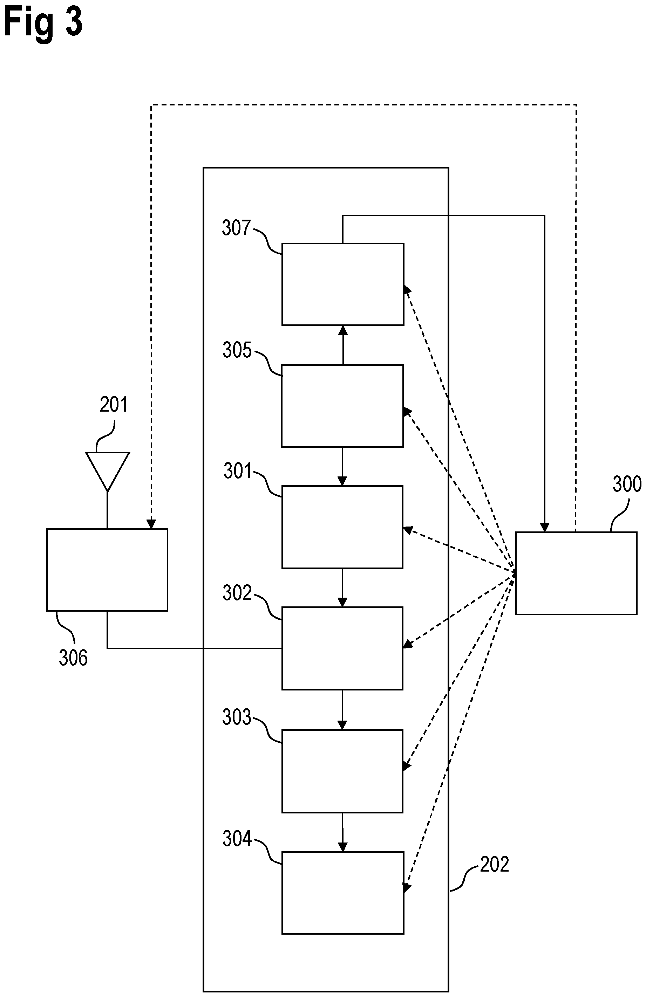

Referring now to Figure 2, it illustrates an example of a GNSS receiver 200 coupled to an antenna 201 and comprising a measurement engine 202 and a positioning engine 203. The antenna 201 receives GNSS signals, which, referring now to Figure 3, are amplified by a low noise amplifier, LNA, 306 while minimizing noise. Referring back to Figure 2, the measurement engine 202 obtains a snapshot measurement SNP_MEAS from these signals. This snapshot measurement may be provided as input data to the positioning engine 203 which calculates position, time, and velocity, PVT_OUT.

Referring now to Figure 3, it illustrates an example of a measurement engine 202 comprising several hardware blocks comprising a frequency synthesizer (e.g. a radio frequency, RF, PLL) 301, a radio frequency, RF, mixer 302, an analog-to-digital converter 303, a block for digital signal processing 304, a crystal oscillator 305, the LNA 306, and a base band PLL, BB PLL, 307. The frequency synthesizer, RF PLL, 301 generates a local oscillator, LO, signal based on the oscillator signal provided from the crystal oscillator 305. This LO signal is then fed into the RF mixer 302, where it is used to down-convert the GNSS signal coming from the antenna 201 and LNA 306 for further processing. Additionally, the BB PLL 307 generates a clock signal for a processing unit 300, also based on the oscillator signal from the crystal oscillator 305, which, in some embodiments, may comprise a TCXO. The processing unit 300 may control some or all of the aforementioned hardware blocks.

GNSS signals received by the antenna 201 are amplified by the LNA 306 and are accordingly fed into the RF mixer 302, which uses the input from the frequency synthesizer 301 to convert the high-frequency satellite signals to lower intermediate frequencies. After the signals are down-converted to intermediate frequencies, they are passed through the analog-to-digital converter 303 to convert the signals into digital form. The digital signals then undergo digital signal processing 304, including filtering to remove noise and interference, and correlation to detect the GNSS signals.

Referring back to Figure 1, it shows the procedure following method 100. In a step 101, the state of the measurement engine 202 is set to an OFF state, whereby some or all hardware blocks of the measurement engine 202 might be turned off. The clock of the processing unit 300 might also be lowered, resulting in very little or even no power consumption while still allowing measurements of sufficient quality for position determination.

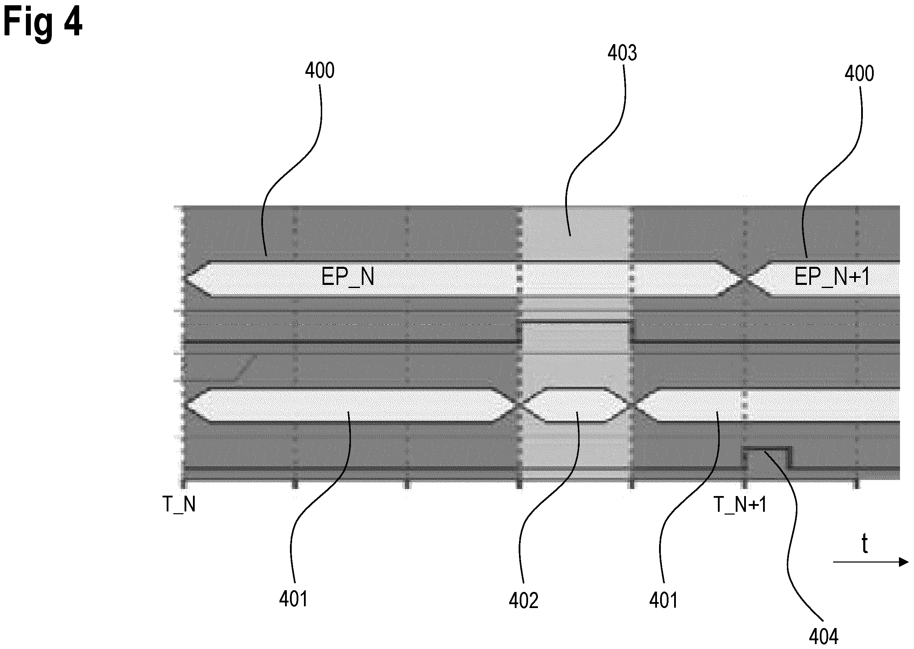

For example, referring now to Figure 4, at the beginning T_N of epoch EP_N, the measurement engine 202 is controlled to be in the OFF state 401 comprising, e.g., setting the state of the measurement engine 202 to the OFF state or leaving the state of the measurement engine 202 in the OFF state, if it is already in the OFF state.

Referring back to Figure 1, in a step 102, the state of the measurement engine 202 is set to an ON state, whereby for example all hardware blocks of the measurement engine 202 are enabled and the clock of the processing unit might be raised, such that the measurement engine 202 can be controlled to obtain a snapshot measurement of received GNSS signals.

In a step 103, with reference to Figure 4, at an instant that is a defined timespan before the end of epoch EP_N, the state of the measurement engine 202 is controlled to be in the ON state 402. During the ON state 402 the measurement engine 202 is controlled to obtain a snapshot measurement of received GNSS signals such that the positioning engine 203 might be enabled to calculate at least one of a position, a velocity, and a time from the snapshot measurement. This instant is either set initially for the very first epoch, for example with a defined timespan of 200 ms or 400 ms before the subsequent epoch, or it is determined during or at the end of the previous epoch.

Referring back to Figure 1, in a step 104, the snapshot measurement obtained in step 103 is evaluated by means of a quality measure such that first or second criteria can be identified, which might lead to either step 105 or step 106. The first and the second criteria depend on a definition of required GNSS signals to be measured, the definition being set for each epoch.

In a step 105, the defined timespan for the subsequent epoch is reduced if the quality measure meets first criteria. For example, the first criteria comprise a condition that the snapshot measurement comprises the required GNSS signals such that the positioning engine 203 is enabled to calculate at least one of a position, velocity, and time from the snapshot measurement, which may be performed, with reference to Figure 4, at a sequence 404.

In some implementations, the first criteria may further comprise a condition that the snapshot measurement is completed at a time instant that is at least a first threshold time before the end of the respective epoch. For example, when the snapshot measurement finishes within the defined timespan, which has been estimated or defined, respectively, during the previous epoch, before the end T_N+1 of the respective epoch EP_N, the defined timespan for the next snapshot measurement may be reduced. In some alternative developments the defined timespan may comprise a constant offset to provide a safety margin towards the end of the respective epoch. That way, the chance of obtaining the required signals through the snapshot measurement is improved.

Referring back to Figure 1, in a step 106, the defined timespan for the subsequent epoch is increased if, for example, the quality measure meets second criteria.

The second criteria may comprise a condition that the snapshot measurement comprises the required GNSS signals such that the positioning engine 203 is enabled to calculate at least one of a position, a velocity, and a time from the snapshot measurement and a further condition that the snapshot measurement is completed at a time instant that is less than a second threshold time before the end of the respective epoch. For example, the second threshold time is equal to or smaller than the first threshold time. By increasing the defined timespan for the next epoch, the chance of obtaining the required signals through the snapshot measurement is improved.

In some implementations the second criteria may, for example, comprise a condition that the snapshot measurement does not comprise the required GNSS signals, e.g. such that the positioning engine 203 is not enabled to calculate at least one of a position, a velocity, and a time from the snapshot measurement.

For example, the positioning engine 203 may provide a list of favorable signals. The list may comprise of the frequencies and code-phases of those favorable signals which makes it easier to locate them. These favorable signals may be used as the required signals when determining the quality measure.

For example, the GNSS receiver 200 might experience a challenging environment, e.g. urban canyons or dense forests, where signal interference is common, requiring more signals to calculate a precise position. In some developments the positioning engine 203 might then provide information, e.g. by setting a variable or a bit, to indicate that a snapshot measurement should comprise more signals as the required signals. This information might lead to, for example, increasing the defined timespan in the next epoch. This improves the chance of obtaining the required signals through the snapshot measurement.

For example, the measurement engine can be controlled to be in the OFF state when obtaining the snapshot measurement comprising the required GNSS signals is completed before the end of the respective epoch. In such case an actual measurement duration can be determined as the time needed for obtaining the required signals for the snapshot measurement. It comes without saying that such measurement duration is shorter than the defined timespan for the current epoch.

Such actual measurement duration may be used for determining the defined timespan for the subsequent epoch. For example, a constant offset or safety margin, e.g. 20 ms, might be added to the actual measurement duration of the current epoch regardless of whether this leads to increasing, maintaining or reducing the timespan for the subsequent epoch. For example, if the defined timespan was e.g. 80 ms, but an actual measurement duration was only 60 ms, the defined timespan for the subsequent epoch is again 80 ms, the result of adding an offset of 20 ms to the actual measurement duration of 60 ms, thereby resulting in a steady cycle. The offset may correspond to the first threshold time mentioned above.

In some implementations, after step 105 or step 106, method 100 may be performed again, such that the method starts over with step 101 or step 102, respectively.

In some implementations, the processing unit 300 can control all the hardware blocks to the OFF state 401. For example, after the measurement duration 403 has elapsed, all or only some hardware blocks might be disabled. In the example of Figure 4, the ON state 402 is ended before the end of epoch EP_N, for example at a time instant when the snapshot measurement has been obtained with the required signals. However, in some implementations the ON state could be maintained until the beginning of the subsequent epoch EP_N+1, when the state of the measurement engine is controlled to be in the OFF state anyway.

In some embodiments, in the OFF state, the clock of the processing unit 300 provided by the BB PLL 307 might be lowered, e.g., using a divider to realize even more energy savings. Consequently, in the ON state, the BB PLL 307 will then be turned on again, or the clock will be raised again, respectively.

Figure 4 shows an example of a timing sequence of a method for operating a GNSS receiver during the epoch 400, wherein a first epoch EP_N, might, for example, comprise a period from a first time T_N to a second time T_N+1. For example, the period may range from 0.1 seconds up to many seconds, e.g. in the range of 10 s to 20 s, and lies to the discretion of the user or a controlling entity. Further shown is an exemplary measurement duration 403, wherein the measurement engine 202 is controlled to the ON state 402 and otherwise to the OFF state 401. After the end of epoch EP_N, at the beginning of the subsequent epoch EP_N+1, at the second time T_N+1, the positioning engine 203 calculates one of a position, a velocity, and a time at a sequence 404.

Hence, with the various implementations described above for the improved concept for operating a GNSS receiver, the state of a measurement engine is controlled such that the hardware can be turned off between obtaining a snapshot measurement which allows power saving of GNSS receivers.

Various embodiments of the improved concept for operating a GNSS receiver can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- 100: method
- 101-106: method steps

- 200: GNSS receiver
- 201: antenna
- 202: measurement engine
- 203: positioning engine

- 300: processing unit
- 301: frequency synthesizer
- 302: radio frequency mixer
- 303: analog-to-digital converter
- 304: digital signal processing
- 305: crystal oscillator
- 306: low noise amplifier
- 307: base band PLL

- 400: epoch
- 401: OFF state
- 402: ON state
- 403: measurement duration
- 404: calculation

## Claims

1. A method (100) for operating a global navigation satellite system, GNSS, receiver (200), the GNSS receiver (200) comprising a measurement engine (202) for processing GNSS signals and a positioning engine (203), the method comprising:
- operating the GNSS receiver (200) for a plurality of consecutive epochs (400) having a predefined periodicity;
- controlling (101), at the beginning of each epoch (400), a state of the measurement engine (202) to be in an OFF state (401);
- controlling (102), at an instant that is a defined timespan before an end of each epoch (400), the state of the measurement engine (202) to an ON state (402), during which the measurement engine (202) is controlled to obtain (103) a snapshot measurement of received GNSS signals;
- evaluating (104) the snapshot measurement by means of a quality measure;
- reducing (105) the defined timespan for a subsequent epoch (400) if the quality measure meets first criteria; and
- increasing (106) the defined timespan for the subsequent epoch (400) if the quality measure meets second criteria;
- wherein the first and the second criteria depend on a definition of required GNSS signals to be measured, the definition being set for each epoch (400).

2. The method according to claim 1, wherein the first criteria comprise a condition that the snapshot measurement comprises the required GNSS signals such that the positioning engine (203) is enabled to calculate at least one of a position, a velocity, and a time from the snapshot measurement.

3. The method according to claim 2, wherein the first criteria comprise a further condition that the snapshot measurement is completed at a time instant that is at least a first threshold time before the end of the respective epoch (400) .

4. The method according to claim 1 or 3, wherein the second criteria comprise
- a condition that the snapshot measurement comprises the required GNSS signals such that the positioning engine (203) is enabled to calculate at least one of a position, a velocity, and a time from the snapshot measurement; and
- a further condition that the snapshot measurement is completed at a time instant that is less than a second threshold time before the end of the respective epoch (400) .

5. The method according to one of claims 1 to 4, wherein the second criteria comprise a condition that the snapshot measurement does not comprise the required GNSS signals, in particular such that the positioning engine (203) is not enabled to calculate at least one of a position, a velocity, and a time from the snapshot measurement.

6. The method according to one of claims 1 to 5, wherein the definition of the required GNSS signals comprises at least one of a sufficient number of GNSS signals to be measured, and a defined set of GNSS signals to be measured.

7. The method according to one of claims 1 to 6, wherein the definition of the required GNSS signals is indicated by the positioning engine (203).

8. The method according to one of claims 1 to 7, wherein controlling the measurement engine (202) to be in the OFF state (401) comprises
- setting the state of the measurement engine (202) to the OFF state (401); or
- leaving the state of the measurement engine (202) in the OFF state (401), if it is already in the OFF state (401).

9. The method according to one of claims 1 to 8, further comprising controlling the measurement engine (202) to be in the OFF state (401) when obtaining the snapshot measurement comprising the required GNSS signals is completed before the end of the respective epoch (400).

10. The method according to one of claims 1 to 9, wherein
- the GNSS receiver (200) is operable in a low power mode and in a full power mode;
- during the low power mode one or more hardware blocks of the measurement engine (202) are disabled in the OFF state (401) and all hardware blocks of the measurement engine (202) are enabled in the ON state (402); and
- during the full power mode all hardware blocks of the measurement engine (202) are enabled continuously during each epoch (400).

11. The method according to one of claims 1 to 10, wherein the periodicity of the plurality of consecutive epochs (400) is configurable.

12. A global navigation satellite system, GNSS, module comprising a processing unit (300) configured to perform the method (100) according to one of claims 1 to 11.

13. The GNSS module according to claim 12, further comprising the measurement engine (202), wherein the measurement engine (202) comprises:
- a low noise amplifier, LNA, (306) for amplifying the GNSS signals coupled to a radio frequency, RF, mixer (302);
- a frequency synthesizer (301) for generating a local oscillator, LO, signal;
- the RF mixer (302) for mixing the GNSS signals with the LO signal; and
- a digital signal processing block (304) coupled to the RF mixer (302) via an analog-to-digital converter (303) and configured for generating the snapshot measurement.

14. The GNSS module according to claim 13, wherein the processing unit (300) is configured to enable and disable at least one of the LNA (306), the frequency synthesizer (301), the RF mixer (302), the analog-to-digital converter (303), and the digital signal processing block (304).

15. A computer program product comprising instructions which, when executed on one or more processors of a global navigation satellite system, GNSS, module, cause the one or more processors to perform the method (100) according to one of claims 1 to 11.
